# FASCICULE DE BREVET EUROPEEN

(11) **EP 1 054 186 B1**
(45) Date de publication et mention de la délivrance du brevet: **07.01.2004**
(21) Numéro de dépôt: 00401315.7
(22) Date de dépôt: 15.05.2000
(51) Int. Cl.: F16F 13/26, H02K 33/04

(54) **Support antivibratoire hydraulique actif, et système antivibratoire actif comportant un tel support**
Aktives, hydraulisches, schwingungsdämpfendes Lager und dieses Lager enthaltendes System
Active hydraulic damping support and active damping system including the same

(30) Priorité: 17.05.1999 FR 9906219
(43) Date de publication de la demande: 22.11.2000
(73) Titulaire: HUTCHINSON, 75008 Paris (FR)
(72) Inventeur: Genesseaux André, 28200 Conie-Molitard (FR); Loubat, Patrice, 45700 Villemandeur (FR); Gastineau, Jean-Luc, 41160 St.-Jean-Froidmentel (FR); Menager, Jöel, 28220 St.-Hilaire-sur-Yerre (FR)
(74) Mandataire: Burbaud, Eric

(56) Documents cités:
- EP-A- 0 536 760
- EP-A- 0 893 620
- FR-A- 2 678 993
- US-A- 5 277 409
- PATENT ABSTRACTS OF JAPAN vol. 1996, no. 08, 30 août 1996 (1996-08-30) & JP 08 086328 A (NISSAN MOTOR CO LTD), 2 avril 1996 (1996-04-02)

## Description

La présente invention est relative aux supports antivibratoires hydrauliques actifs et aux systèmes antivibratoires actifs comportant de tels supports.

Plus particulièrement, l'invention concerne un support antivibratoire hydraulique actif destiné à être interposé entre deux éléments rigides dans un véhicule automobile pour amortir et filtrer des vibrations entre ces deux éléments, ce support comprenant au moins :
- des première et deuxième armatures rigides solidarisables respectivement avec les premier et deuxième éléments rigides,
- une paroi en élastomère qui relie entre elles les première et deuxième armatures en définissant une chambre de travail remplie de liquide,
- un piston qui présente au moins une face en contact avec le liquide et qui est monté sur la première armature de façon à pouvoir se déplacer selon un axe de vibration, ce piston étant sollicité par des moyens élastiques vers une position de repos,
- et un actionneur électromagnétique comportant :
   . un électroaimant qui comprend une bobine électrique associée à une carcasse métallique,
   . un noyau magnétique mobile qui est déplaçable sous l'action de l'électroaimant et qui est lié au piston pour générer des contre-vibrations dans le liquide.

Un support antivibratoire actif de ce type est décrit par exemple dans le document EP-A-0 893 620, où un actionneur électromagnétique à un seul électroaimant associé à un ressort de rappel est envisagé à titre de variante.

Ces supports antivibratoires actifs connus comportent des capteurs de position du piston, et leur chaîne de commande inclut un asservissement de cette position, ce qui permet de faire travailler l'actionneur électromagnétique sur une très large gamme de fréquences, y compris pendant que le véhicule roule.

Les supports antivibratoires de ce type donnent satisfaction au plan de l'efficacité antivibratoire, mais présentent toutefois l'inconvénient d'être complexes et coûteux, et de nécessiter des moyens de commande eux-mêmes complexes et coûteux.

Pour tenter de pallier cet inconvénient, on a proposé divers supports antivibratoires actifs à commande pneumatique, tels que celui divulgué dans le document JP-A-9 317 815. En pratique, ces supports à commande pneumatique utilisent généralement une source de dépression servant également pour l'assistance au freinage.

Mais, pour des raisons de sécurité, certains constructeurs automobiles ne souhaitent pas que l'on utilise la source de dépression de l'assistance au freinage pour commander les supports actifs. De plus, le coût et la complexité des supports antivibratoires actifs à commande pneumatique sont encore relativement importants, dans la mesure où ces supports nécessitent un raccordement à la source de dépression. Enfin, tous les véhicules automobiles ne permettent pas un raccordement à une source de dépression.

La présente invention a donc pour but de pallier les inconvénients précités des supports antivibratoires actifs à commande électromagnétique, sans pour autant avoir recours à une commande pneumatique.

A cet effet, selon l'invention, un support antivibratoire hydraulique du genre en question est essentiellement caractérisé en ce que l'actionneur électromagnétique est un actionneur à électroaimant proportionnel, la carcasse de l'électroaimant et le noyau mobile présentant des formes adaptées pour que, lorsque la bobine est parcourue par un courant électrique ayant une valeur comprise dans une plage de fonctionnement normal et que le noyau mobile se trouve dans une certaine plage de positions correspondant au fonctionnement normal de l'actionneur électromagnétique, le noyau mobile subisse une force dépendant uniquement de ce courant (l'actionneur électromagnétique peut être constitué notamment par un solénoïde proportionnel, connu en soi dans d'autres applications, qui exerce une force proportionnelle au courant qui parcourt la bobine ou au carré de ce courant : des exemples de tels solénoïdes de ce type peuvent être trouvés en particulier dans les documents EP-A-0 785 558, EP-A-0 762 442 et US-A-4 998 074).

Grâce à ces dispositions, on peut commander l'actionneur électromagnétique du support antivibratoire selon l'invention d'une façon très simple, uniquement en contrôlant le courant électrique qui parcourt la bobine de l'électroaimant. En effet, comme la force exercée par l'actionneur sur le liquide du support antivibratoire dépend uniquement dudit courant et non de la position du noyau mobile, il n'est plus nécessaire de mesurer cette position et d'avoir recours à un asservissement de position pour contrôler avec précision la force exercée à chaque instant sur le piston.

Les moyens de commande nécessaires pour contrôler le support antivibratoire selon l'invention peuvent donc être particulièrement simplifiés, et peuvent notamment être constitués par l'unité centrale électronique de contrôle du moteur du véhicule.

On notera que le support antivibratoire selon l'invention présente une efficacité maximale à des fréquences relativement basses (typiquement, de 20 à 40 Hz pour un moteur à explosion interne à 4 cylindres et plus généralement de 0 à 100 Hz), correspondant au fonctionnement du moteur au ralenti. Comme ce sont ces fréquences qui génèrent les effets les plus désagréables et les plus perceptibles par l'utilisateur du véhicule, l'efficacité du support antivibratoire selon l'invention est particulièrement satisfaisante.

Lorsque le moteur fonctionne à un régime plus élevé que le ralenti, ce qui correspond normalement à une situation où le véhicule roule, on fait temporairement circuler un courant plus élevé que la normale dans la bobine de l'électroaimant, de façon à bloquer l'actionneur électromagnétique en faisant "coller" le noyau mobile à la carcasse de l'électroaimant, ce courant de blocage pouvant ensuite être réduit après "collage" du noyau mobile.

L'actionneur électromagnétique du support antivibratoire selon l'invention pourrait toutefois continuer à fonctionner à des fréquences de vibration supérieures à celles du ralenti pour continuer à générer des contre-vibrations visant à annuler les vibrations du moteur.

Dans des modes de réalisation préférés du support antivibratoire selon l'invention, on peut éventuellement avoir recours en outre à l'une et/ou à l'autre des dispositions suivantes :
- la carcasse de l'électroaimant et le noyau mobile présentent des formes adaptées pour que le noyau mobile subisse une force proportionnelle au carré de l'intensité du courant électrique parcourant la bobine lorsque ce courant électrique a une valeur comprise dans ladite plage de fonctionnement normal et que le noyau mobile se trouve dans la plage de positions correspondant au fonctionnement normal de l'actionneur électromagnétique ;
- le support antivibratoire comporte en outre une paroi souple en élastomère qui est portée par la première armature et qui définit une chambre de compensation remplie de liquide communiquant avec la chambre de travail par l'intermédiaire d'un canal étranglé ;
- le support antivibratoire comporte en outre une chambre de commande remplie de liquide qui communique avec la chambre de travail par l'intermédiaire d'un passage étranglé, le piston étant en contact avec le liquide contenu dans cette chambre de commande ;
- la force exercée par l'électroaimant sur le noyau mobile est toujours dirigée dans un même sens et présente une certaine valeur moyenne, les moyens élastiques étant disposés pour solliciter le noyau mobile en sens inverse de la force exercée par l'électroaimant, ces moyens élastiques étant dimensionnés pour que, lorsque l'électroaimant exerce ladite force moyenne sur le noyau mobile, le noyau mobile se trouve dans une position moyenne, sensiblement centrée par rapport à la plage de positions correspondant au fonctionnement normal de l'actionneur électromagnétique ;
- la carcasse et le noyau mobile sont réalisés en matériau métallique feuilleté et constituent l'un, un premier élément magnétique et l'autre, un deuxième élément magnétique, la carcasse présentant sensiblement une forme en U avec une base s'étendant, selon un axe transversal perpendiculaire à l'axe de vibration, entre deux branches latérales qui s'étendent parallèlement à l'axe de vibration, la bobine étant disposée entre les branches latérales et étant centrée sur l'axe de vibration en entourant une tige centrale qui s'étend selon ledit axe de vibration et qui appartient au premier élément magnétique, cette tige centrale étant séparée du deuxième élément magnétique par un certain entrefer selon l'axe de vibration, et le deuxième élément magnétique comportant en outre deux premiers pôles de linéarisation qui encadrent la tige centrale selon l'axe transversal et qui s'étendent parallèlement à l'axe de vibration à l'intérieur de la bobine en présentant une largeur transversale décroissante vers le premier élément magnétique, les deux premiers pôles de linéarisation et la tige centrale présentant respectivement des faces en regard parallèles ;
- le premier élément magnétique comporte en outre deux seconds pôles de linéarisation qui sont mutuellement alignés selon l'axe transversal et qui sont disposés à l'extérieur de la bobine, ces deux seconds pôles de linéarisation s'étendant chacun selon l'axe de vibration en présentant une largeur transversale décroissante vers le deuxième élément magnétique, ce deuxième élément magnétique comportant deux parois axiales qui s'étendent selon l'axe de vibration et qui encadrent les deux seconds pôles de linéarisation, les deux seconds pôles de linéarisation et les deux parois axiales présentant respectivement des faces en regard parallèles.

Par ailleurs, l'invention a également pour objet un système antivibratoire actif comportant un support antivibratoire tel que défini ci-dessus et un circuit de commande qui alimente la bobine de l'électroaimant, ce circuit de commande étant adapté pour déterminer à chaque instant le courant délivré à la bobine en fonction d'au moins un paramètre lié au fonctionnement du moteur, indépendamment de la position instantanée du noyau mobile par rapport à la carcasse de l'électroaimant.

Dans des modes de réalisation préférés du système antivibratoire selon l'invention, on peut avoir recours en outre à l'une et/ou à l'autre des dispositions suivantes:
- le circuit de commande comprend un calculateur de contrôle du moteur du véhicule, qui est adapté pour déterminer à chaque instant le courant électrique délivré à la bobine de l'électroaimant, en fonction d'un signal de synchronisation lié au cycle de fonctionnement réel du moteur et en fonction de données mémorisées, lesquelles données mémorisées donnent au moins l'amplitude et la phase d'un signal représentatif du courant électrique délivré à la bobine en fonction dudit signal de synchronisation ;
- le signal représentatif du courant électrique est sensiblement un signal rectangulaire, et le support antivibratoire comporte une chambre de commande remplie de liquide qui communique avec la chambre de travail par l'intermédiaire d'un passage étranglé, le piston étant en contact avec le liquide contenu dans cette chambre de commande ;
- le circuit de commande est adapté pour délivrer à la bobine de l'électroaimant un courant électrique suffisamment fort pour bloquer le noyau mobile lorsque le signal de synchronisation correspond à un régime dépassant une fréquence prédéterminée.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue en coupe verticale d'un support antivibratoire selon une première forme de réalisation de l'invention, avec un schéma bloc du circuit de commande de ce support,
- la figure 2 est une vue en coupe selon la ligne II-II de la figure 1,
- la figure 3 est une vue écorchée du support antivibratoire de la figure 1,
- la figure 4 est un diagramme montrant la force produite à courant constant par un actionneur électromagnétique linéaire tel que celui équipant le support antivibratoire de la figure 1 en fonction du déplacement du noyau mobile, en comparaison de la force produite par un actionneur électromagnétique non-linéaire utilisé dans les supports antivibratoires actifs de l'art antérieur,
- les figures 5 et 6 sont des diagrammes montrant deux exemples de courbes suivies par la force exercée par l'actionneur électromagnétique du support antivibratoire de la figure 1, en fonction du temps,
- la figure 7 est un diagramme montrant la force produite par le support antivibratoire de la figure 1 en fonction de la fréquence des vibrations du piston, en comparaison de la force produite par un support antivibratoire actif dépourvu de passage étranglé entre le piston et la chambre de travail,
- les figures 8 et 9 sont des vues similaires à la figure 1, dans des deuxième et troisième formes de réalisation de l'invention,
- et la figure 10 est une vue de détail montrant une partie de l'actionneur électromagnétique, dans une quatrième forme de réalisation de l'invention.

Sur les différentes figures, les mêmes références désignent des éléments identiques ou similaires.

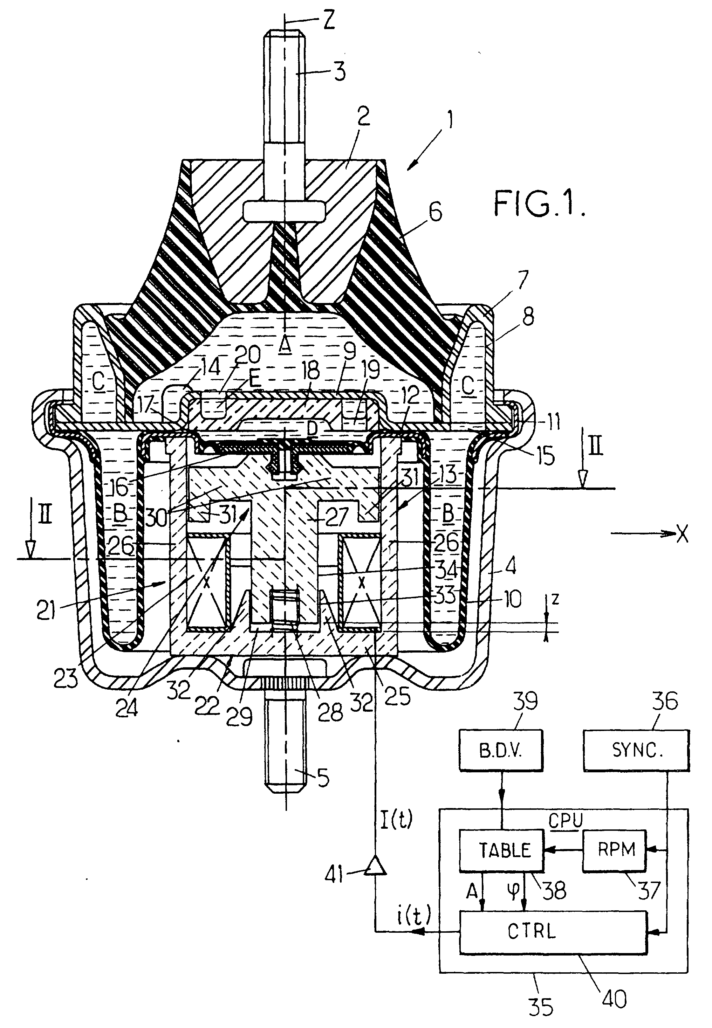

La figure 1 représente un support antivibratoire hydraulique actif 1, qui comprend classiquement :
- une tête métallique rigide prolongée vers le haut par un goujon 3 d'axe vertical Z, destiné à être fixé par exemple à une partie du groupe motopropulseur d'un véhicule automobile.
- une embase métallique rigide 4, qui dans l'exemple représenté se présente sous la forme d'une coupelle dont le fond est prolongé vers le bas par un goujon 5 d'axe Z, destiné à être fixé par exemple au châssis du véhicule,
- et une paroi tronconique épaisse 6 en élastomère, qui est centrée sur l'axe Z et qui s'étend en s'évasant vers le bas, depuis un sommet solidaire de la tête 2 jusqu'à une base annulaire solidarisée de façon étanche avec une couronne métallique rigide 7 qui est creuse et délimite intérieurement une gorge 8 ouverte vers le bas, la paroi épaisse 6 présentant une résistance à la compression suffisante pour jouer un rôle de support vis-à-vis du bloc motopropulseur fixé à la tête 2.

De plus, une cloison métallique rigide 9 est fixée sous la couronne 7, de préférence par sertissage du bord périphérique supérieur de l'embase 4 en forme de coupelle sur la couronne 7, la cloison 9 délimitant avec la paroi en élastomère une chambre de travail A remplie de liquide, de préférence de l'huile de silicone.

Par ailleurs, une membrane souple 10 en élastomère est surmoulée :
- d'une part, sur une armature annulaire extérieure 11 qui est pressée avec étanchéité sous une périphérie extérieure de la cloison 9 par sertissage du bord périphérique supérieur de l'embase 4 sur la couronne 7,
- et d'autre part, sur une armature annulaire intérieure 12 qui est pressée avec étanchéité sous la cloison 9, par serrage entre cette cloison et une carcasse rigide 13 qui sera décrite ci-après, laquelle carcasse 13 est elle-même pressée contre l'armature 12 par le fond de l'embase 4.

La membrane souple en élastomère 10 délimite ainsi entre les armatures 11 et 12 une chambre de compensation B annulaire qui est remplie de liquide et qui communique avec la chambre de travail A par l'intermédiaire d'un canal étranglé C en arc de cercle délimité entre la gorge 8 de la couronne 7 et la cloison 9. Ce canal étranglé C débouche dans la chambre de travail A par l'intermédiaire d'une ouverture horizontale 14 ménagée dans la couronne 7, et il débouche dans la chambre de compensation B par l'intermédiaire d'une ouverture 15 ménagée dans la cloison 9.

La membrane souple 10 comporte enfin une partie centrale surmoulée sur un piston 16 rigide qui est relié à l'armature annulaire intérieure 12 par un soufflet annulaire 17 en élastomère appartenant à ladite membrane souple 10 et permettant au piston 16 de se déplacer verticalement en vibrant.

Le piston 15 délimite une chambre de commande D remplie de liquide, avec une partie centrale emboutie de la cloison 9 qui fait saillie vers le haut à l'intérieur de la chambre de travail A.

Un insert rigide 18, métallique ou en matière plastique, est emboîté dans la partie centrale emboutie de la cloison 9 en délimitant avec ladite cloison 9 un passage étranglé E en arc de cercle qui communique :
- d'une part, avec la chambre de commande D par l'intermédiaire d'un orifice 19 percé en partie inférieure de l'insert 18,
- et d'autre part, avec la chambre de travail A par l'intermédiaire d'un orifice 20 percé dans la cloison 9.

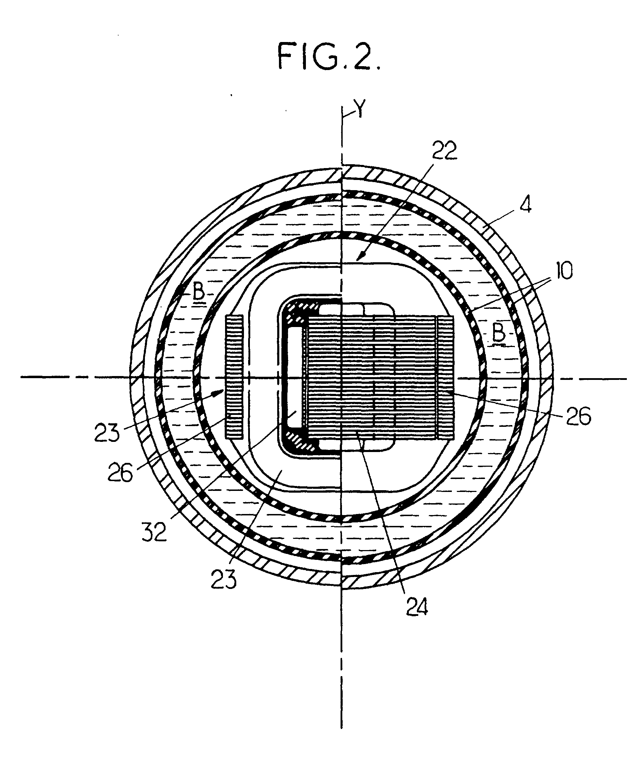

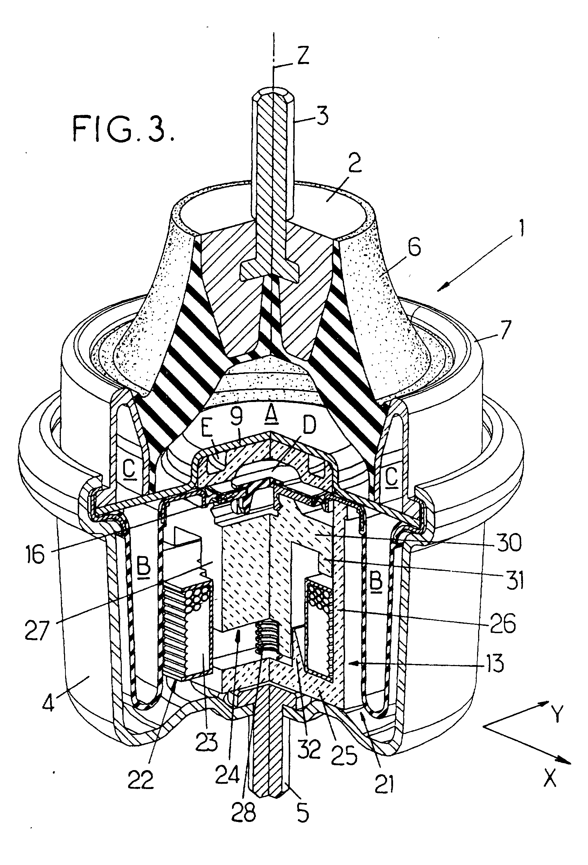

Comme représenté sur les figures 1 à 3, le piston 16 est commandé par un actionneur électromagnétique 21 à réluctance variable qui comporte :
- un électroaimant 22 qui comprend lui-même d'une part, la carcasse métallique 13 susmentionnée, réalisée en matériau magnétique et de préférence en matériau métallique feuilleté, par exemple à base de feuilles d'acier au silicium accolées les unes aux autres, et d'autre part, une bobine électrique annulaire 23 qui est centrée sur l'axe vertical Z et qui est disposée à l'intérieur de la carcasse 13,
- et un noyau magnétique mobile 24 lui-même réalisé de préférence en matériau métallique feuilleté, par exemple à base de feuilles en acier au silicium accolées les unes aux autres, ce noyau mobile étant solidarisé avec le piston 16.

Dans l'exemple représenté, la carcasse métallique 13 présente une forme en U qui est comprise dans un plan vertical comprenant d'une part, l'axe Z, et d'autre part, un axe horizontal transversal X, la carcasse 13 présentant ainsi une base horizontale 25 et deux branches latérales 26 à section horizontale rectangulaire qui s'étendent chacune vers le haut en encadrant la bobine 23.

Par ailleurs, le noyau mobile 24 comporte une tige centrale verticale 27 à section horizontale rectangulaire, qui est sollicitée vers le haut pas un ressort 28 prenant appui sur la base 25 de la carcasse 13 et qui est séparée de ladite base par un entrefer.

L'extrémité supérieure de la tige centrale 27 est solidarisée par encliquetage avec le piston 16 et se prolonge vers l'extérieur par deux bras horizontaux 30, eux-mêmes prolongés vers le bas par deux rebords 31 qui sont disposés en regard des branches latérales 26 de la carcasse 13.

Enfin, la base 25 de la carcasse 13 comporte deux pôles de linéarisation 32 qui se présentent chacun sous la forme d'une nervure s'étendant horizontalement selon un axe Y perpendiculaire à l'axe X susmentionné, chaque pôle de linéarisation s'étendant verticalement en présentant une largeur transversale (mesurée selon l'axe X) qui décroît vers le haut.

Ces deux pôles de linéarisation encadrent la tige centrale 27 du noyau mobile et présentent deux faces intérieures verticales 33 qui sont parallèles aux faces en regard 34 de la tige 27.

Les pôles de linéarisation 32 permettent de faire en sorte que la force exercée par l'électroaimant 22 sur le noyau mobile 27 dépende uniquement de l'intensité du courant électrique circulant dans la bobine 23, tant que ce courant intensité se trouve dans une plage de fonctionnement normal et tant que la hauteur z de l'entrefer est elle-même comprise dans une plage de fonctionnement normal.

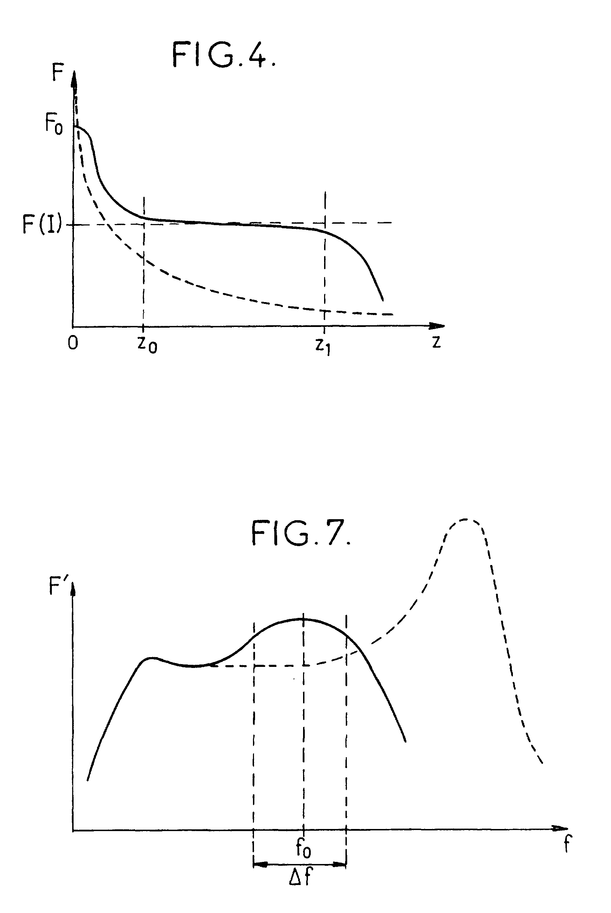

Ainsi, comme représenté en trait plein sur la figure 4, lorsque le courant électrique I parcourant la bobine 23 est maintenu constant, la force F exercée par l'actionneur électromagnétique 21 sur le piston 16 est sensiblement constante et égale à une valeur F(I) proportionnelle au carré de l'intensité du courant électrique I, tant que la valeur z de l'entrefer est comprise entre deux valeurs prédéterminées z0 et z1. En-dessous de z0, la force F à courant I constant augmente rapidement, jusqu'à une valeur de collage F0 lorsque l'entrefer z devient nul. A l'inverse, la force F diminue rapidement lorsque l'entrefer z devient supérieur à z1, mais on notera qu'il est possible de limiter la course du piston 16 de façon que l'entrefer z ne devienne jamais supérieur à z1.

Comme représenté en pointillés sur la figure 4, les actionneurs électromagnétiques non linéaires utilisés classiquement dans les supports antivibratoires hydrauliques produisaient sur le piston 16 une force F dépendant fortement de la valeur z de l'entrefer, de sorte qu'il était nécessaire de mesurer en permanence la valeur de cet entrefer et d'asservir la valeur du courant à la valeur z mesurée pour contrôler efficacement l'actionneur électromagnétique, ce qui impliquait un système d'actionnement complexe et coûteux.

Au contraire, selon la présente invention, le support antivibratoire actif peut être contrôlé par un dispositif de commande simple, tel que par exemple celui représenté sur la figure 1, qui utilise le calculateur 35 de contrôle du moteur (CPU).

Plus précisément, le calculateur 35 reçoit, de façon connue en soi, un signal de synchronisation provenant d'un ensemble de mesures 36 (SYNC.) détectant le passage des pistons du moteur à leur point mort haut.

Ce signal de synchronisation est reçu par le calculateur 35, qui comprend un module logiciel 37 (RPM) qui calcule le régime du moteur en tours/mn à partir du signal de synchronisation. Le régime du moteur est ensuite utilisé par un module logiciel 38 ("TABLE") qui, à partir de tables de valeurs mémorisées, détermine l'amplitude A et la phase ϕ du signal représentatif du courant I circulant dans la bobine 23 en fonction :
- du régime du moteur,
- et éventuellement d'autres paramètre externes tels que par exemple des informations d'état sur le fonctionnement de la boîte de vitesse, informations qui peuvent être données au calculateur 35 par un ou plusieurs capteurs 39 (B.D.V.).

L'amplitude et la phase déterminées par le module logiciel 38 sont transmises à un module 40 (CTRL) qui émet, à partir de cette amplitude et de cette phase et à partir du signal de synchronisation, un signal i(t) qui peut être ensuite amplifié par un amplificateur 41 pour donner l'intensité I(t) qui parcourt la bobine 23.

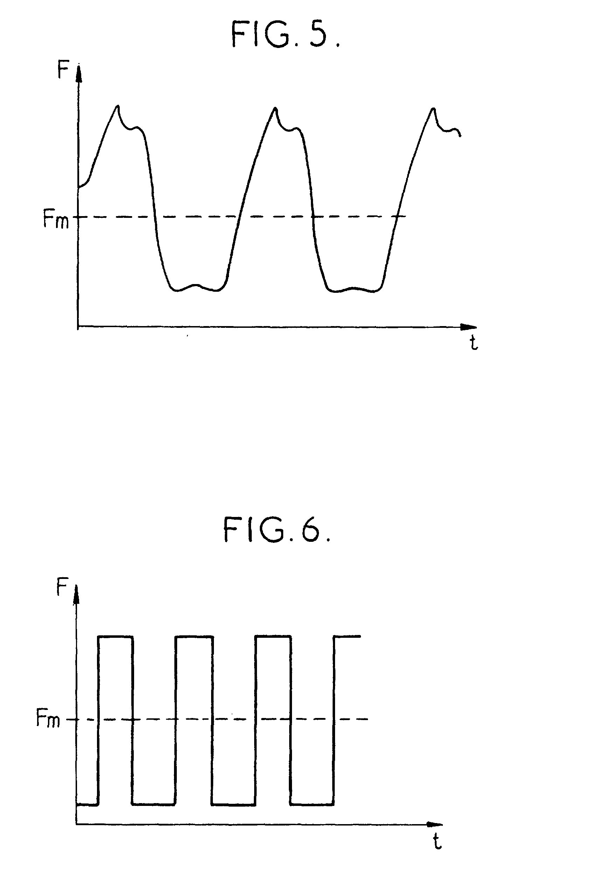

Comme représenté sur la figure 5, la force F(t) proportionnelle à I(t)² peut correspondre à un signal relativement complexe, auquel cas il est nécessaire de contrôler le courant I(t) au moyen d'un asservissement intégré dans le calculateur 35 ou dans l'amplificateur 41.

Comme on peut le voir sur la figure 5, la force F(t) transmise au piston 16 a une composante moyenne Fm, en l'occurrence orientée vers le bas, puisque l'électroaimant 22 n'agit sur le noyau mobile 24 que dans un seul sens. Pour éviter que la composante moyenne Fm de la force F fasse sortir le noyau mobile 24 de la zone de linéarité de l'actionneur électromagnétique, le ressort 28 est dimensionné de façon à produire une force orientée vers le haut sensiblement égale à Fm lorsque le noyau mobile 24 se trouve au milieu de la zone de linéarité, c'est-à-dire lorsque l'entrefer z est sensiblement égal à la moyenne de z0 et z1 (figure 4).

Eventuellement, comme représenté sur la figure 6, on peut se contenter de générer au niveau du calculateur 35 un signal i(t) rectangulaire qui permet d'exercer sur le piston 16 une force F(t) correspondant elle-même à un signal rectangulaire, c'est-à-dire en forme de créneau. Dans ce cas, il n'est pas nécessaire d'asservir le signal i(t) ou I(t).

Ce signal rectangulaire est filtré par le passage étranglé E, dont la fréquence de résonance correspond à la fréquence de ralenti du moteur (par exemple, environ 30 Hz), de sorte que les contre-vibrations qui parviennent dans la chambre de travail A annulent efficacement les vibrations exercées par le moteur en régime de ralenti, malgré la forme simplifiée du signal F(t).

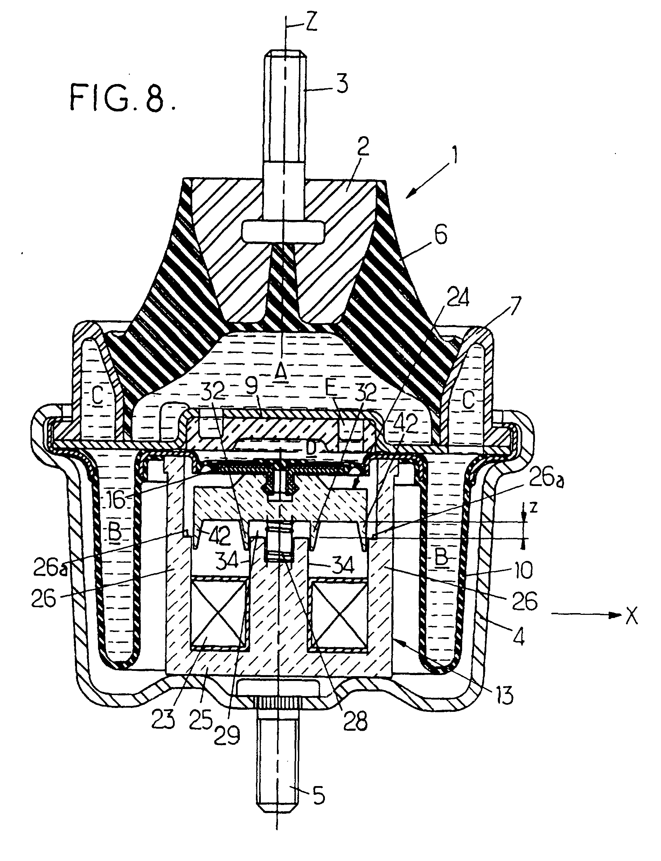

Par ailleurs, comme représenté sur la figure 7, la présence de la chambre de commande D et du passage étranglé E permet d'améliorer l'efficacité de l'actionnement du piston 16 aux fréquences de ralenti, c'est-à-dire dans une certaine plage de fréquences Δf de vibrations du piston autour de la fréquence de ralenti f0 (f0 peut par exemple être de l'ordre de 30 Hz, et Δf peut par exemple être de l'ordre de 10 à 20 Hz). En effet, comme représenté en trait plein sur la figure 7, la force F' qui s'exerce entre la tête 2 et l'embase 4 du support antivibratoire est maximisée dans la plage de fréquences Δf pour une amplitude donnée du signal de force F(t) exercée sur le piston.

En l'absence de la chambre de commande D et du passage étranglé E, comme représenté en pointillés sur la figure 7, l'efficacité de l'actionnement du piston serait moindre aux fréquences de ralenti du moteur. En revanche, cette efficacité serait alors supérieure à des fréquences relativement élevées, par exemple supérieures à 100 Hz, mais ceci est sans importance puisque le support antivibratoire de la présente invention est spécialement destine à atténuer les vibrations dues aux fréquences de ralenti du moteur, qui sont les plus gênantes et les plus perceptibles par l'utilisateur.

D'ailleurs, lorsque le régime du moteur dépasse une valeur prédéterminée, correspondant par exemple à 100 Hz (soit 1500 tours/mn pour un moteur à quatre cylindres), on bloque de préférence le piston 16 en faisant "coller" le noyau mobile 24 de l'actionneur électromagnétique à la carcasse 13 de l'électroaimant. Pour cela, on envoie un fort courant continu dans la bobine 23 jusqu'à ce que l'entrefer z soit réduit à 0, après quoi le courant peut être réduit du fait que la force de blocage F0 du noyau mobile est très élevée (voir figure 4).

En variante, comme représenté sur la figure 8, la tige 27 pourrait être solidaire de la carcasse 13, le noyau mobile 24 étant alors réduit à sa partie supérieure, et les pôles de linéarisation 32 s'étendant vers le bas à partir de ce noyau mobile. Dans ce cas, il est également possible de prévoir deux pôles de linéarisation supplémentaires 42 qui se présentent chacun sous la forme d'une nervure s'étendant horizontalement selon l'axe Y et qui s'étendent verticalement vers le bas en présentant une largeur transversale (mesurée selon l'axe X qui décroît vers le bas).

Ces deux pôles de linéarisation supplémentaires 42 sont disposés au voisinage des branches latérales 26 de la carcasse 13, lesquelles branches latérales peuvent comporter intérieurement un épaulement 26a orienté vers le haut et disposé sensiblement au niveau des pôles de linéarisation supplémentaires 42. Chacun des pôles de linéarisation supplémentaires 42 présente une face externe verticale, parallèle à la face interne de la branche latérale 26 correspondante de la carcasse 13.

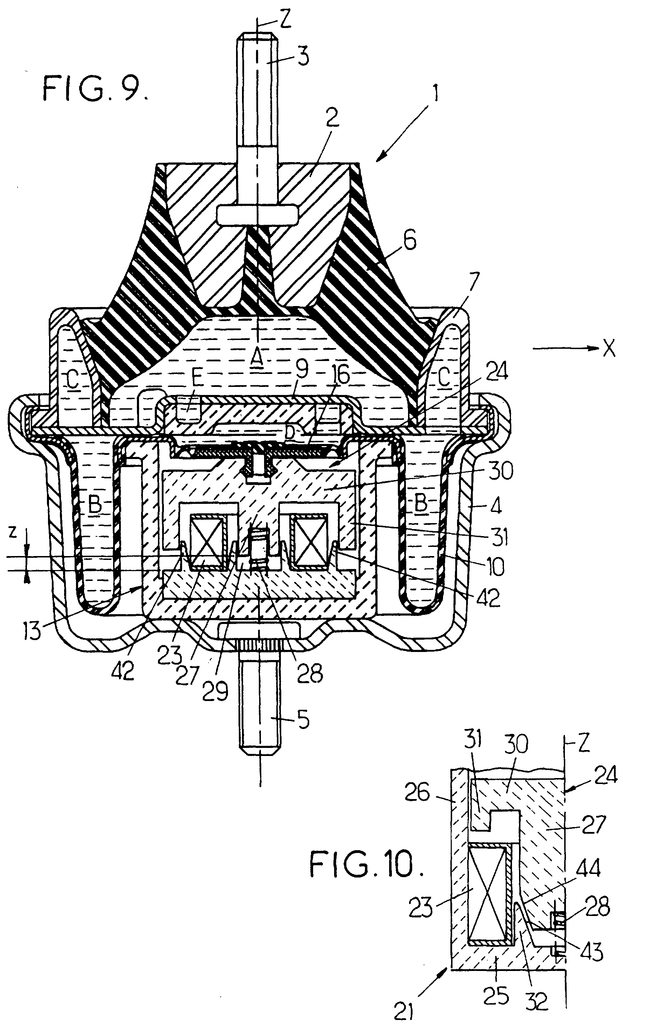

Selon une autre variante, représentée sur la figure 9, les pôles de linéarisation 32, 42 sont solidaires de la carcasse 13 comme dans l'exemple de la figure 1, les faces externes verticales des pôles de linéarisation supplémentaires 42 étant cette fois-ci disposées en regard des faces internes verticales des rebords 31 du noyau mobile 24.

Enfin, selon encore une autre variante représentée sur la figure 10, les pôles de linéarisation 42 pourraient présenter des faces externes verticales et des faces internes 43 s'étendant en biais et divergeant vers le haut, la partie inférieure de la tige 27 du noyau mobile 24 présentant alors elle-même des faces biaises 44 parallèles aux faces 43 susmentionnées.

## Revendications

1. Support antivibratoire hydraulique actif destiné à être interposé entre deux éléments rigides dans un véhicule automobile pour amortir et filtrer des vibrations entre ces deux éléments, ce support comprenant au moins :
- des première et deuxième armatures rigides (4, 2) solidarisables respectivement avec les premier et deuxième éléments rigides,
- une paroi en élastomère (6) qui relie entre elles les première et deuxième armatures (4, 2) en définissant une chambre de travail (A) remplie de liquide,
- un piston (16) qui présente au moins une face en contact avec le liquide et qui est monté sur la première armature (4) de façon à pouvoir se déplacer selon un axe de vibration (Z), ce piston étant sollicité par des moyens élastiques (28) vers une position de repos,
- et un actionneur électromagnétique (21) comportant :
. un électroaimant (22) qui comprend une bobine électrique (23) associée à une carcasse métallique (13),
. un noyau magnétique mobile (24) qui est déplaçable sous l'action de l'électroaimant et qui est lié au piston pour générer des contre-vibrations dans le liquide,
**caractérisé en ce que** l'actionneur électromagnétique (21) est un actionneur à électroaimant proportionnel, la carcasse (13) de l'électroaimant et le noyau mobile (24) présentant des formes adaptées pour que, lorsque la bobine (23) est parcourue par un courant électrique ayant une valeur comprise dans une plage de fonctionnement normal et que le noyau mobile (24) se trouve dans une certaine plage de positions (z0-z1) correspondant au fonctionnement normal de l'actionneur électromagnétique, le noyau mobile subisse une force (F) dépendant uniquement de ce courant.

2. Support antivibratoire selon la revendication 1, dans lequel la carcasse (13) de l'électroaimant et le noyau mobile (24) présentent des formes adaptées pour que le noyau mobile subisse une force proportionnelle au carré de l'intensité du courant électrique parcourant la bobine lorsque ce courant électrique a une valeur comprise dans ladite plage de fonctionnement normal et que le noyau mobile se trouve dans la plage de positions correspondant au fonctionnement normal de l'actionneur électromagnétique.

3. Support antivibratoire selon l'une quelconque des revendications 1 et 2, comportant en outre une paroi souple (10) en élastomère qui est portée par la première armature (4) et qui définit une chambre de compensation (B) remplie de liquide communiquant avec la chambre de travail (A) par l'intermédiaire d'un canal étranglé (C).

4. Support antivibratoire selon l'une quelconque des revendications précédentes, comportant en outre une chambre de commande (D) remplie de liquide qui communique avec la chambre de travail (A) par l'intermédiaire d'un passage étranglé (E), le piston (16) étant en contact avec le liquide contenu dans cette chambre de commande (D).

5. Support antivibratoire selon l'une quelconque des revendications précédentes, dans lequel la force (F) exercée par l'électroaimant (22) sur le noyau mobile est toujours dirigée dans un même sens et présente une certaine valeur moyenne (Fm), les moyens élastiques (28) étant disposés pour solliciter le noyau mobile (24) en sens inverse de la force exercée par l'électroaimant (22), ces moyens élastiques étant dimensionnés pour que, lorsque l'électroaimant exerce ladite force moyenne sur le noyau mobile, le noyau mobile se trouve dans une position moyenne, sensiblement centrée par rapport à la plage de positions (z0-z1) correspondant au fonctionnement normal de l'actionneur électromagnétique.

6. Support antivibratoire selon l'une quelconque des revendications précédentes, dans lequel la carcasse (13) et le noyau mobile (24) sont réalisés en matériau métallique feuilleté et constituent l'un, un premier élément magnétique et l'autre, un deuxième élément magnétique, la carcasse présentant sensiblement une forme en U avec une base (25) s'étendant, selon un axe transversal (X) perpendiculaire à l'axe de vibration (Z), entre deux branches latérales (26) qui s'étendent parallèlement à l'axe de vibration, la bobine (23) étant disposée entre les branches latérales et étant centrée sur l'axe de vibration (Z) en entourant une tige centrale (27) qui s'étend selon ledit axe de vibration et qui appartient au premier élément magnétique, cette tige centrale étant séparée du deuxième élément magnétique par un certain entrefer (29) selon l'axe de vibration (Z), et le deuxième élément magnétique comportant en outre deux premiers pôles de linéarisation (32) qui encadrent la tige centrale (27) selon l'axe transversal (X) et qui s'étendent parallèlement à l'axe de vibration (Z) à l'intérieur de la bobine (23) en présentant une largeur transversale décroissante vers le premier élément magnétique, les deux premiers pôles de linéarisation et la tige centrale présentant respectivement des faces en regard parallèles (33, 34).

7. Support antivibratoire selon la revendication 6, dans lequel le premier élément magnétique comporte en outre deux seconds pôles de linéarisation (42) qui sont mutuellement alignés selon l'axe transversal (X) et qui sont disposés à l'extérieur de la bobine (23), ces deux seconds pôles de linéarisation s'étendant chacun selon l'axe de vibration (Z) en présentant une largeur transversale décroissante vers le deuxième élément magnétique, ce deuxième élément magnétique comportant deux parois axiales (26, 31) qui s'étendent selon l'axe de vibration et qui encadrent les deux seconds pôles de linéarisation (42), les deux seconds pôles de linéarisation et les deux parois axiales présentant respectivement des faces en regard parallèles.

8. Système antivibratoire actif comportant un support antivibratoire (1) selon l'une quelconque des revendications précédentes et un circuit de commande (35, 41) qui alimente la bobine (23) de l'électroaimant, ce circuit de commande étant adapté pour déterminer à chaque instant le courant délivré à la bobine en fonction d'au moins un paramètre lié au fonctionnement du moteur, indépendamment de la position instantanée du noyau mobile (24) par rapport à la carcasse (13) de l'électroaimant.

9. Système antivibratoire selon la revendication 8, dans lequel le circuit de commande comprend un calculateur (35) de contrôle du moteur du véhicule, qui est adapté pour déterminer à chaque instant le courant électrique délivré à la bobine de l'électroaimant, en fonction d'un signal de synchronisation lié au cycle de fonctionnement réel du moteur et en fonction de données mémorisées, lesquelles données mémorisées donnent au moins l'amplitude et la phase d'un signal représentatif du courant électrique délivré à la bobine en fonction dudit signal de synchronisation.

10. Système antivibratoire selon la revendication 8 ou la revendication 9, dans lequel le signal représentatif du courant électrique est sensiblement un signal rectangulaire, et le support antivibratoire comporte une chambre de commande (D) remplie de liquide qui communique avec la chambre de travail (A) par l'intermédiaire d'un passage étranglé (E), le piston (16) étant en contact avec le liquide contenu dans cette chambre de commande.

11. Système antivibratoire selon l'une quelconque des revendications 8 à 10, dans lequel le circuit de commande (35, 41) est adapté pour délivrer à la bobine (23) de l'électroaimant un courant électrique suffisamment fort pour bloquer le noyau mobile (24) lorsque le signal de synchronisation correspond à un régime dépassant une fréquence prédéterminée.

## Claims

1. An active anti-vibration support designed to be inserted between two rigid elements in a motor vehicle in order to damp and filter vibrations between these two elements, this support comprising at least:
- first and second rigid frames (4, 2) which may be joined respectively to the first and second rigid elements,
- an elastomer wall (6) joining the first and second frames (4, 2) to one another defining a working chamber (A) filled with liquid,
- a piston (16) having at least one face in contact with the liquid and which is mounted on the first frame (4) so that it can be displaced along an axis of vibration (Z), this piston being biased towards a rest position by resilient means (28),
- and an electromagnetic actuator (21) comprising:
. an electromagnet (22) comprising an electric coil (23) co-operating with a metal frame (13),
. a mobile magnetic core (24) which is displaceable and which is linked to the piston in order to generate counter-vibrations in the liquid,
**characterised in that** the electromagnetic actuator (21) is a proportional electromagnet actuator, the frame (13) of the electromagnet and the mobile core (24) being of shapes designed so that when an electric current of a value falling within a normal operating range is passed through the coil (23) and the mobile core (24) is located within a certain range of positions (z0-z1) corresponding to normal operation of the electromagnetic actuator, the mobile core is subjected to a force (F) depending solely on this current.

2. An anti-vibration support as claimed in claim 1, in which the frame (13) of the electromagnet and the mobile core (24) are of shapes designed so that the mobile core is subjected to a force proportional to the square of the intensity of the electric current passing through the coil if this electric current is of a value falling within the normal operating range and the mobile core is located within the range of positions corresponding to normal operation of the electromagnetic actuator.

3. An anti-vibration support as claimed in any one of claims 1 and 2, further having a flexible elastomer wall (10) which is supported by the first frame (4) and which defines a compensating chamber (B) filled with liquid communicating with the working chamber (A) via a throttled passage (C).

4. An anti-vibration support as claimed in any one of the preceding claims, further having has a control chamber (D) filled with liquid which communicates with the working chamber (A) via a throttled passage (E), the piston (16) being in contact with the liquid contained in this control chamber (D).

5. An anti-vibration support as claimed in any one of the preceding claims in which the force (F) exerted by the electromagnet (22) on the mobile core is always directed in a same direction and has a certain mean value (Fm), the resilient means (28) being arranged so as to bias the mobile core (24) in the direction opposite the force exerted by the electromagnet (22), these resilient means being dimensioned so that the electromagnet exerts said mean force on the mobile core, the mobile core being located in a mean position, substantially centred relative to the range of positions (z0-z1) corresponding to the normal operation of the electromagnetic actuator.

6. An anti-vibration support as claimed in any one of the preceding claims, in which the frame (13) and the mobile core (24) are made from a laminated metal material, one of which constitutes a first magnetic element and the other a second magnetic element, the frame substantially being of a U-shape with a base (25) extending along a transverse axis (X) perpendicular to the vibration axis (Z) between two side branches (26) extending parallel with the vibration axis, the coil (23) being arranged between the side branches and centred on the vibration axis (Z) surrounding a central rod (27) extending along said vibration axis and belonging to the first magnetic element, this central rod being separated from the second magnetic element by said air gap (z) along the vibration axis (Z) and the second magnetic element also having two first linearization poles (32) which frame the central rod (27) along the transverse axis (X) and which extend parallel with the vibration axis (Z) inside the coil (23), having a transverse width which decreases towards the first magnetic element, the two first linearization poles and the central rod respectively having parallel faces which face one another (33, 34).

7. An anti-vibration support as claimed in claim 6, in which the first magnetic element also has two second linearization poles (42) which are mutually aligned along the transverse axis (X) and which are arranged outside the coil (23), each of these two second linearization poles extending along the vibration axis (Z) having a transverse width which decreases towards the second magnetic, element, this second magnetic element having two axial walls (26, 31) which extend along the vibration axis and which frame the two second linearization poles (42), the two second linearization poles and the two axial walls respectively having parallel faces facing one another.

8. An active anti-vibration system incorporating an anti-vibration support (1) as claimed in any one of the preceding claims and a control circuit (35, 41) which supplies the coil (23) of the electromagnet, this control circuit being set up so as to determine at each instant the current applied to the coil as a function of at least one parameter linked to the operation of the engine, independently of the instantaneous position of the mobile core (24) relative to the frame (13) of the electromagnet.

9. An anti-vibration system as claimed in claim 8, in which the control circuit has a computer (35) for controlling the motor vehicle, which is set up to determine at each instant the electric current applied to the coil of the electromagnet as a function of a synchronisation signal linked to the real operating cycle of the engine and as a function of data stored in memory, which stored data give at least the amplitude and the phase of a signal representative of the electric current applied to the coil as a function of said synchronisation signal.

10. An anti-vibration system as claimed in claim 8 or claim 9, in which the signal representative of the electric current is substantially a rectangular signal and the anti-vibration support has a control chamber (D) filled with liquid which communicates with the working chamber (A) via a throttled passage (E), the piston (16) being in contact with the liquid contained in this control chamber.

11. An anti-vibration system as claimed in any one of claims 8 to 10, in which the control circuit (35, 41) is set up to apply to the coil (23) of the electromagnet an electric current strong enough to lock the mobile core (24) if the synchronisation signal corresponds to an engine speed in excess of a predetermined frequency.

## Patentansprüche

1. Aktives hydraulisches, schwingungsdämpfendes Lager zum Anordnen zwischen zwei starren Elementen in einem Automobil, um Schwingungen zwischen diesen beiden Elementen zu dämpfen und zu filtern, wobei dieses Lager zumindest folgendes aufweist:
- eine erste und eine zweite starre Armatur (4, 2), die mit dem ersten bzw. dem zweiten starren Element verbindbar sind;
- eine Wand aus Elastomer (6), die die erste und zweite Armatur (4, 2) miteinander verbindet und dabei eine Arbeitskammer (A) definiert, die mit Flüssigkeit gefüllt ist,
- einen Kolben (16), der zumindest eine Fläche in Kontakt mit der Flüssigkeit hat und der an der ersten Armatur (4) so angebracht ist, dass er sich gemäß einer Schwingungsachse (Z) bewegen kann, wobei dieser Kolben über elastische Mittel (28) in Richtung einer Ruhestellung belastet ist; und
- ein elektromagnetisches Stellglied (21), das folgendes aufweist:
einen Elektromagneten (22) mit einer einem metallischen Gehäuse (13) zugeordneten elektrische Spule (23), und
einen beweglichen magnetischen Kern (24), der unter der Einwirkung des Elektromagneten beweglich ist und der mit dem Kolben verbunden ist, um in der Flüssigkeit Gegenschwingungen zu erzeugen,
**dadurch gekennzeichnet, dass** das elektromagnetische Stellglied (21) ein Elektromagnet-Proportional-Stellglied ist und dass das Gehäuse (13) des Elektromagneten und der bewegliche Kern (24) so gestaltet sind, dass der bewegliche Kern, wenn die Spule (23) von einem elektrischen Strom mit einen Wert durchflossen wird, der sich in einem normalen Funktionsbereich befindet, und er (24) sich in einem bestimmten Positionsbereich (z0-z1) befindet, der der normalen Funktionsweise des elektromagnetischen Stellglieds entspricht, eine Kraft (F) erfährt, die nur von diesem Strom abhängt.

2. Schwingungsdämpfendes Lager nach Anspruch 1, wobei das Gehäuse (13) des Elektromagneten und der bewegliche Kern (24) so gestaltet sind, dass der bewegliche Kern eine Kraft erfährt, die proportional zum Quadrat der Stärke des elektrischen Stroms ist, der die Spule durchfließt, wenn dieser elektrische Strom einen Wert hat, der sich innerhalb des besagten Bereichs der normalen Funktionsweise befindet, und wenn der bewegliche Kern sich in dem Positionsbereich befindet, der der normalen Funktionsweise des elektromagnetischen Stellglieds entspricht.

3. Schwingungsdämpfendes Lager nach einem der Ansprüche 1 und 2, wobei das Lager außerdem eine weiche Wand (10) aus Elastomer aufweist, die von der ersten Armatur (4) getragen wird und eine Kompensationskammer (B) definiert, die mit Flüssigkeit gefüllt ist und mit der Arbeitskammer (A) über einen schmalen Kanal (C) kommuniziert.

4. Schwingungsdämpfendes Lager nach einem der vorangehenden Ansprüche, welches Lager außerdem eine Steuerkammer (D) aufweist, die mit Flüssigkeit gefüllt ist und mit der Arbeitskammer (A) über einen schmalen Durchgang (E) kommuniziert, wobei der Kolben (16) in Kontakt mit der Flüssigkeit in dieser Steuerkammer (D) steht.

5. Schwingungsdämpfendes Lager nach einem der vorangehenden Ansprüche, bei welchem die von dem Elektromagneten (22) auf den beweglichen Kern ausgeübte Kraft (F) immer in dem gleichen Sinn gerichtet ist und einen bestimmten Mittelwert (Fm) hat, wobei die elastischen Mittel (28) so angeordnet sind, dass sie den beweglichen Kern (24) in dem der von dem Elektromagneten (22) ausgeübten Kraft entgegengerichteten Sinne beaufschlagen, und wobei die elastischen Mittel so dimensioniert sind, dass sich der bewegliche Kern, wenn der Elektromagnet die mittlere Kraft auf den beweglichen Kern ausübt, in einer mittleren Position befindet, und zwar im Wesentlichen zentriert bezüglich des Positionsbereichs (z0-z1), der der normalen Funktionsweise des elektromagnetischen Stellglieds entspricht.

6. Schwingungsdämpfendes Lager nach einem der vorangehenden Ansprüche, bei welchem das Gehäuse (13) und der bewegliche Kern (24) aus einem aus dünnen Lagen bestehenden metallischen Material ausgebildet sind und ein erstes bzw. ein zweites magnetisches Element bilden, wobei das Gehäuse im Wesentlichen die Form eines U mit einer Basis (25) hat, die sich entlang einer Querachse (X) rechtwinklig zur Schwingungsachse (Z) zwischen zwei Seitenarmen (26) erstreckt, die sich ihrerseits parallel zur Schwingungsachse erstrecken, wobei die Spule (23) zwischen den Seitenarmen angeordnet ist und auf der Schwingungsachse (Z) zentriert ist, wobei sie eine Mittelstange (27) umgibt, die sich entlang der besagten Schwingungsachse erstreckt und die zu dem ersten magnetischen Element gehört, wobei diese Mittelstange von dem zweiten magnetischen Element durch einen gewissen Luftspalt (29) entlang der Schwingungsachse (Z) getrennt ist, und wobei das zweite magnetische Element außerdem zwei erste Linearisierungspole (32) aufweist, die die Mittelstange (27) entlang der Querachse (X) einrahmen und die sich parallel zur Schwingungsachse (Z) im Inneren der Spule (23) erstrecken und dabei eine querverlaufende Breite haben, die in Richtung des ersten magnetischen Elements abnimmt, wobei die beiden ersten Linearisierungspole und die Mittelstange jeweils gegenüberliegende, parallele Flächen (33, 34) haben.

7. Schwingungsdämpfendes Lager nach Anspruch 6, wobei das erste magnetische Element außerdem zwei zweite Linearisierungspole (42) aufweist, die wechselseitig entlang der Querachse (X) ausgerichtet sind und die außerhalb der Spule (23) angeordnet sind, wobei sich diese beiden zweiten Linearisierungspole jeweils entlang der Schwingungsachse (Z) erstrecken und dabei eine querverlaufende Breite haben, die in Richtung des zweiten magnetischen Elements abnimmt, wobei das zweite magnetische Element zwei axiale Wände (26, 31) aufweist, die sich entlang der Schwingungsachse erstrecken und die die beiden zweiten Linearisierungspole (42) einrahmen, wobei die zweiten Linearisierungspole und die beiden axialen Wände jeweils Flächen aufweisen, die einander gegenüber liegen und zueinander parallel verlaufen.

8. Aktives schwingungsdämpfendes System mit einem schwingungsdämpfenden Lager (1) nach einem der vorangehenden Ansprüche und einem Steuerkreis (35, 41), der die Spule (23) des Elektromagneten speist, wobei dieser Steuerkreis dazu ausgestaltet ist, zu jedem Zeitpunkt den der Spule zugeführten Strom in Funktion von zumindest einem Parameter zu bestimmen, der mit der Funktionsweise des Motors in Zusammenhang steht, und zwar unabhängig von der momentanen Position des beweglichen Kerns (24) bezüglich des Gehäuses (13) des Elektromagneten.

9. Schwingungsdämpfendes System nach Anspruch 8, wobei der Steuerkreis einen Kontrollrechner (35) des Motors des Fahrzeugs aufweist, der zu jedem Zeitpunkt den der Spule des Elektromagneten zugeführten elektrischen Strom bestimmen kann, und zwar als Funktion eines Synchronisationssignals, das mit dem tatsächlichen Funktionszyklus des Motors in Zusammenhang steht, und als Funktion von gespeicherten Daten, wobei diese gespeicherten Daten zumindest die Amplitude und die Phase eines Signals abbilden, das für den der Spule zugeführten elektrischen Strom als Funktion des Synchronisationssignals steht.

10. Schwingungsdämpfendes System nach Anspruch 8 oder Anspruch 9, wobei das Signal, das für den elektrischen Strom steht, im Wesentlichen ein rechteckiges Signal ist, und wobei das schwingungsdämpfende Lager eine Steuerkammer (D) aufweist, die mit Flüssigkeit gefüllt ist und mit der Arbeitskammer (A) über einen schmalen Durchgang (E) kommuniziert, wobei der Kolben (16) in Kontakt mit der Flüssigkeit in dieser Steuerkammer steht.

11. Schwingungsdämpfendes System nach einem der Ansprüche 1 bis 10, wobei der Steuerkreis (35, 41) dazu ausgestaltet ist, der Spule (23) des Elektromagneten einen elektrischen Strom zuzuführen, der ausreichend stark ist, um den beweglichen Kern (24) zu blockieren, wenn das Synchronisationssignal einem Bereich entspricht, der eine vorbestimmte Frequenz überschreitet.
